Europäisches Patentamt

European Patent Office

Office européen des brevets

(11) Publication number: **0 085 165**
**B1**

# EUROPEAN PATENT SPECIFICATION

(45) Date of publication of patent specification: **07.05.86**

(51) Int. Cl.⁴: **G 11 B 23/02**

(21) Application number: **82111570.6**

(22) Date of filing: **14.12.82**

(54) **Molded diskette with built in cleaning and head compliance pads.**

(30) Priority: **28.01.82 US 343635**

(43) Date of publication of application:
**10.08.83 Bulletin 83/32**

(45) Publication of the grant of the patent:
**07.05.86 Bulletin 86/19**

(84) Designated Contracting States:
**DE FR GB IT**

(56) References cited:
**GB-A-2 067 000**
**US-A-3 947 893**
**US-A-4 291 353**

**PATENTS ABSTRACTS OF JAPAN, vol. 2, no.
49, 6th April 1978, pages 696 E 78;**

(73) Proprietor: **International Business Machines
Corporation
Old Orchard Road
Armonk, N.Y. 10504 (US)**

(72) Inventor: **Chenoweth, Roger Don
1675 Albion Lane
Longmont Colorado 80501 (US)**
Inventor: **Mueller, Herbert Allen
3827 4th Place N.W.
Rochester Minnesota 55901 (US)**
Inventor: **Smith, Donald Jay
622 Third Avenue N.E.
Byron Minnesota 55920 (US)**
Inventor: **Zell, Michael Norman
3524 Ogden Court N.E.
Rochester Minnesota 55901 (US)**

(74) Representative: **Vekemans, André
COMPAGNIE IBM FRANCE
Département de Propriété Industrielle
F-06610 La Gaude (FR)**

Courier Press, Leamington Spa, England.

## Description .

This invention relates to data storage systems which use a flexible magnetic disk. While such disks are quite rugged and do not require the same standard of care as hard disks, it is nevertheless necessary to provide some measure of protection to avoid surface contamination which would degrade performance.

The protection assures that dust, fingerprints and other contaminants are not allowed to reach the surface of the disk and interfere with the recording process. In addition to protecting the disk from contamination, the enclosure should provide for cleaning the disk to remove the contaminants which will inevitably reach the surface. Since the disk is flexible and must be held in contact with the magnetic transducer, some form of backup plate or pressure pad must be used to hold the disk against the transducer. The enclosure must accommodate magnetic transducers for access to both sides of the disk.

The most common form of flexible magnetic disk enclosure is an envelope of flexible plastic material having apertures for the drive hub and access by the magnetic transducer. The envelope usually has some form of non-woven wipe material which is designed to rub against the disk and remove the contaminating materials which enter the envelope. Because the disk·must have adequate clearance to rotate freely within the envelope, the contact between the wipe material and the surface of the disk is intermittent and unpredictable. The absence of any force urging the wipe material and the disk into engagement makes it difficult to obtain good cleaning action.

To overcome the poor cleaning characteristics it has become common to use various means to apply pressure to opposite sides of the envelope to force the wipe material against the disk surface. Document US—A—3,947,893 describes a flexible magnetic disk enclosure having pressure pads to apply pressure to opposite sides of the enclosure to force the wipe material against the disk surface. This technique has been satisfactory to meet the requirements for reliability and accuracy in the past but it's complexities and cost in future applications are handicaps. It would be very desirable to eliminate the mechanism used to apply pressure since such mechanisms require maintenance, adjustment and often times, repair.

The principal object of the invention is to provide a flexible disk enclosure which provides improved cleaning action without the need for mechanical devices on the associated drive. This is accomplished in a disk enclosure of rigid material containing the usual flexible magnetic disk and non-woven wipe material.

The invention is set out in claim 1.

A transducer access opening in the form of a radial slot in one of the rigid sides provides a location where the magnetic transducer can interact with the disk. On the other side of the enclosure, opposite the transducer access opening, is a radial ridge. This ridge acts as a pressure pad for the magnetic transducer and also forces the non-woven wipe material into close contact with the disk. The wipe material dislodges dirt particles and other foreign particles and traps them in the material where they do not interface with the reading or recording operation. Since the ridge is an integral part of the disk enclosure, no additional mechanical elements are required to achieve the improved cleaning action.

Since transducer apertures can be provided on both sides of the enclosure, both sides of the disk can be cleaned.

In some applications it may not be expedient or necessary to have two transducer openings. In such situations, the ridge alone serves to hold the wipe material in sufficiently close relationship to the disk surface to provide good cleaning action. Alternatively, a second transducer opening can be provided simply for cleaning purposes.

Fig. 1 is an exploded isometric view of a magnetic disk enclosure according to one embodiment of the invention.

Fig. 2 is an isometric view of an assembled enclosure.

Fig. 3 is a sectional view taken along line III—III of Fig. 2.

Fig. 4 is a sectional view taken along line IV—IV of Fig. 2.

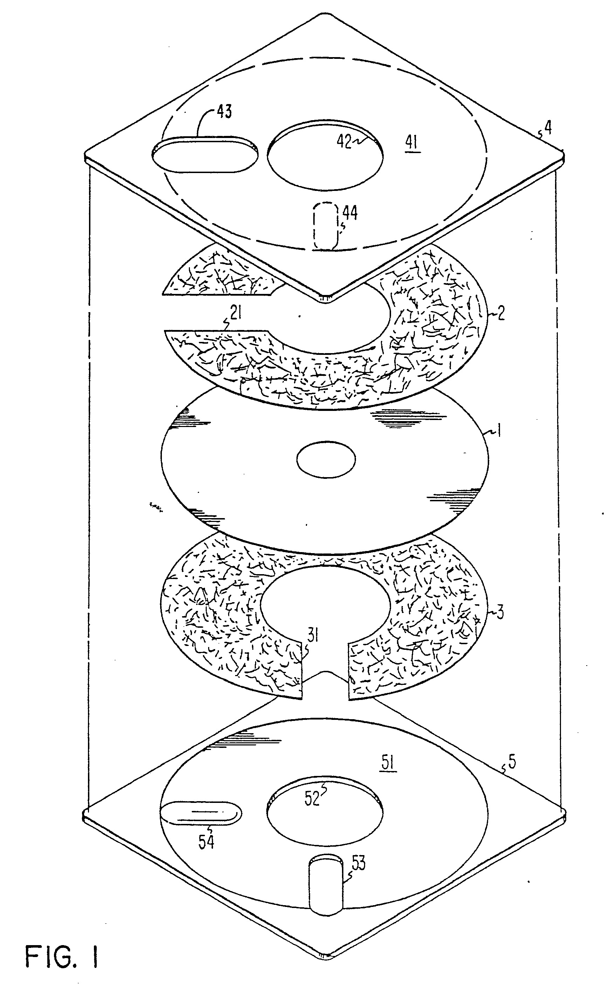

In Fig. 1 a flexible magnetic disk 1 is disposed between an upper wiper 2 and a lower wiper 3 made of a non-woven material. A first side 4 and a second side 5 are molded from a plastic material such as Acrylonitrile-Butadiene-Styrene. Each side has a depressed area 41 and 51, respectively as well as a central aperture 42 and 52 which allows a drive spindle, not shown, to engage flexible disk 1. Side 4 has a second aperture 43 which provides access for a magnetic transducer which reads and records data on flexible disk 1. A slot 21 in the non-woven wiper material 2 allows a transducer inserted through aperture 43 to bear directly against the first surface of magnetic disk 1. Side 5 has a corresponding second aperture 53 which, in conjunction with slot 31 in non-woven wiper material 3, allows a second magnetic transducer to engage the second surface of magnetic disk 1.

Opposite slots 43 and 53 in sides 5 and 4 respectively are ridges 54 and 44. These ridges are slightly elevated regions which project above the surface of central areas 41 and 51. The ridges serve as a substitute for the commonly used pressure pad and prevent the flexible disk from flexing away from the magnetic transducer during a data transfer operation. In addition the ridges serve to force the non-woven wipe material against the surface of the flexible disk to provide good cleaning action.

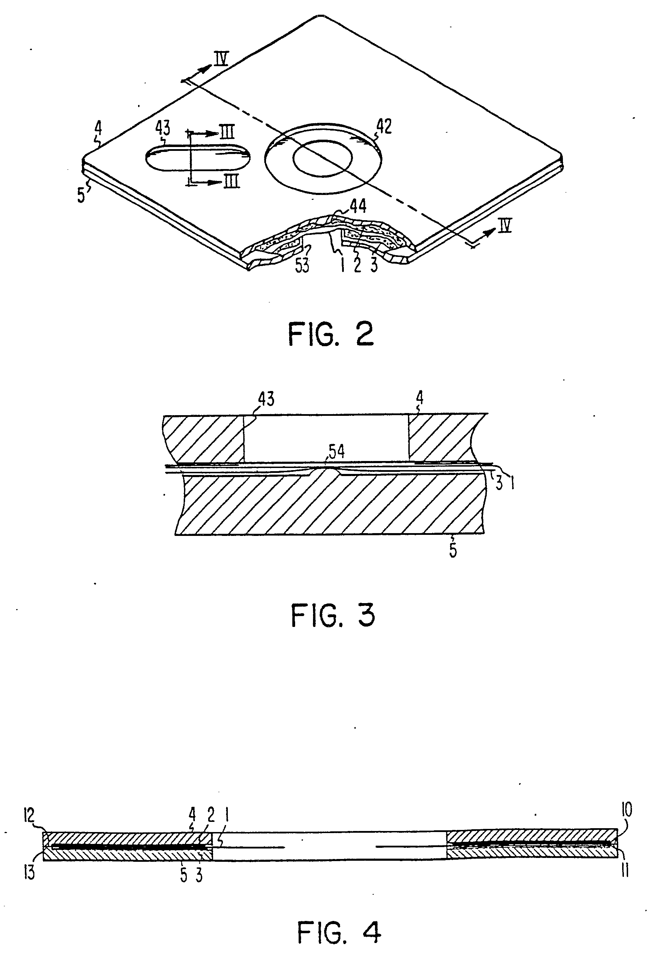

Fig. 2 shows an assembled disk with parts cut away to expose the ridge. It can be seen that pressure exerted by a magnetic transducer inserted through aperture 53 will cause disk 1 to bear against non-woven wiper material 2 and ridge 44. This provides a pressure pad arrangement to assure good head to disk engagement and also improves the cleaning action.

Fig. 3 taken along the line III—III of Fig. 2 shows the configuration of ridge 54. It can be seen that the non-woven material 3 is forced into engagement with disk 1 by ridge 54.

Fig. 4 is a sectional view along the line IV—IV of Fig. 2 showing the magnetic disk 1 sandwiched between non-woven wipe material 2 and 3. The first side 4 and second side 5 are joined at the edges 10—11 and 12—13 by thermo compression bonding or a suitable cement.

Returning to Fig. 1, the side 4 and the side 5 are geometrically identical and can therefore be made from the same mold. The 90° displacement of slot 43 from slot 53 allows adequate space for the transducer access mechanisms so that both transducers can be accessing the disk 1 at the same time. The thickness of sides 4 and 5 afford protection to disk 1 which is not available with the usual flexible envelope. Since disk 1 is spaced away from the outer surfaces of side 4 and 5, it is less prone to pick up contaminants from objects in contact with the surfaces.

## Claims

1. A flexible magnetic disk assembly of the type comprising:

a flexible magnetic disk (1),

an enclosure surrounding said disk,

said enclosure including,

a first and a second side (4, 5) of rigid material, said first and second sides having a raised outer edge on abutting surfaces to define a cavity (41, 51) therebetween,

at least one transducer access opening (43, 53) in said first and second sides, respectively, and upper and lower wipers (2, 3) of non woven material disposed between said first and second sides and surrounding said disk, having slots (21, 31) for allowing transducer access,

characterized in that:

opposite said access openings (43, 53) in said first and second sides (4, 5), respectively are raised ridge portions (54, 44) of said sides extending radially at a location from said access openings in said same side so that said wiper portions opposite said access openings are forced in close contact with said disk.

2. A flexible magnetic disk assembly according to Claim 1 characterized in that:

said raised outer edges define an interior circular depression (41, 51).

3. A flexible magnetic disk assembly according to Claim 2 characterized in that:

the thickness of said sides in the area of said circular depression (41, 51) is at least 50% of the thickness in the area of said raised edges.

## Revendications

1. Un ensemble à disque magnétique flexible du type comprenant:

un disque magnétique flexible (1),

une enveloppe entourant ledit disque, ladite enveloppe comprenant:

un premier et un second cotés (4, 5) en matériau rigide,

lesdits premier et second cotés présentant un bord extérieur en relief sur des surfaces portant l'une contre l'autre afin de définir un logement (41, 51) entre elles,

au moins une ouverture d'accès de transducteur (43, 53) ménagée dans lesdits premier et second cotés, respectivement, et

des disques de nettoyage supérieur et inférieur (2, 3) en matière non tissée, disposés entre lesdits premier et second cotés et entourant ledit disque, et présentant des découpes (21, 31) pour permettre l'accès du transducteur,

caractérisé en ce que:

on trouve en face desdites ouvertures d'accès (43, 53) dans lesdits premier et second cotés (4, 5), respectivement, des nervures (54, 44) desdits cotés orientées radialement en un point à partir desdites ouvertures d'accès dans ledit même coté de façon que les parties desdits disques de nettoyage en face desdites ouvertures d'accès, soient appliquées en contact serré contre ledit disque.

2. Un ensemble à disque magnétique flexible selon la revendication 1 caractérisé en ce que:

lesdits bords extérieurs en relief définissent un logement intérieur circulaire (41, 51).

3. Un ensemble à disque magnétique flexible selon la revendication 2 caractérisé en ce que:

l'épaisseur desdits cotés dans la zone dudit logement circulaire (41, 51) est égale à au moins 50% de l'épaisseur dans la zone desdits bords en relief.

## Patentansprüche

1. Eine flexible Magnetplattenanlage des Typs, der folgendes umfasst:

— eine flexible Magnetplatte (1),

— ein Gehäuse, das die genannte Magnetplatte umgibt,

wobei das genannte Gehäuse beinhaltet:

eine erste und eine zweite Seite (4, 5) aus starrem Material,

die genannten ersten und zweiten Seiten, die jeweils eine erhöhte Aussenkante auf den Stossflächen umfassen, um dazwischen eine Aushöhlung (41, 51) zu definieren,

une zumindest eine Zugangsöffnung (43, 53) zu einem Wandler, die jeweils in den genannten ersten und zweiten Seiten vorgesehen ist, und

obere und untere Wischer (2, 3) aus nicht gewebtem Material, die zwischen den genannten ersten und zweiten Seiten angeordnet sind und die genannte Magnetplatte umgeben und Schlitze (21, 31) als Zugang zum Wandler enthalten, dadurch gekennzeichnet, dass:

den genannten Zugangsöffnungen (43, 53) gegenüberliegend und jeweils auf den genannten ersten und zweiten Seiten (4, 5) angeordnet erhöhte Stegabschnitte (54, 44) der genannten Seiten vorgesehen sind, die sich radial an einem Einbauort von den genannten Zugangsöffnungen aus auf derselben genannten Seite derart erstrecken, dass die genannten Wischerabschnitte, die den genannten Zugangsöffnungen gegenüberliegen, gezwungen sind, mit der genannten Magnetplatte in engem Kontakt zu kommen.

2. Eine flexible Magnetplattenanlage nach Anspruch 1, dadurch gekennzeichnet, dass:

die genannten erhöhten Aussenkanten eine kreisförmige innere Vertiefung (41, 51) abgrenzen.

3. Eine flexible Magnetplattenanlage nach Anspruch 2, dadurch gekennzeichnet, dass:

die Dicke der genannten Seiten im Bereich der genannten kreisförmigen Vertiefung (41, 51) zumindest 50% der Dicke im Bereich der genannten erhöhten Kanten beträgt.

FIG. I

FIG. 2

FIG. 3

FIG. 4

2